Europäisches Patentamt

European Patent Office

Office européen des brevets

(11) Veröffentlichungsnummer : **0 118 668**
**B1**

# (12) EUROPÄISCHE PATENTSCHRIFT

(45) Veröffentlichungstag der Patentschrift :
03.12.86

(21) Anmeldenummer : 84100360.1

(22) Anmeldetag : 14.01.84

(51) Int. Cl.⁴ : **H 01 R 13/447, H 02 G   3/14**

(54) **Steckdose.**

(30) Priorität : 17.02.83 DE 3305404

(43) Veröffentlichungstag der Anmeldung :
19.09.84 Patentblatt 84/38

(45) Bekanntmachung des Hinweises auf die Patenterteilung : 03.12.86 Patentblatt 86/49

(84) Benannte Vertragsstaaten :
AT BE DE FR SE

(56) Entgegenhaltungen :
US-A- 4 293 173

(73) Patentinhaber : BROWN, BOVERI & CIE Aktiengesellschaft
Kallstadter Strasse 1
D-6800 Mannheim 31 (DE)

(72) Erfinder : Eickhoff, Willi, Dipl.-Ing.
Lützowstrasse 60
D-5800 Hagen (DE)
Erfinder : Mittler, Leo, Dipl.-Ing.
Beethovenstrasse 9
D-5882 Meinerzhagen (DE)

(74) Vertreter : Kempe, Wolfgang, Dr. et al
c/o Brown, Boveri & Cie AG Postfach 351
D-6800 Mannheim 1 (DE)

EP 0 118 668 B1

## Beschreibung

Die Erfindung bezieht sich auf eine Steckdose gemäß dem Oberbegriff des Patentanspruchs 1.

Solche Steckdosen zum Einbau in eine Wand oder zum Aufbau auf eine Wand sind allgemein bekannt. Sie bestehen in der Regel aus einem Gerätesockel, der spannungsführende Kontaktteile trägt, einer Einrichtung zur Befestigung der Steckdose in oder auf der Wand sowie einer Abdeckung. Als Befestigungseinrichtung werden bei Unterputzsteckdosen Tragringe und Spreizen verwendet und bei Aufputzsteckdosen Befestigungsnocken. Die Abdeckung hat je nach Einbauart die Form einer Platte oder einer Kappe.

Wenn Wände gestrichen oder tapeziert werden, werden während solcher Renovierungsarbeiten üblicherweise die Abdeckungen der Steckdosen entfernt, damit auch im Bereich der Steckdosen eine saubere Ausbildung der Renovierung möglich ist. Das bedeutet, daß während dieser Zeit spannungsführende Teile der Steckdose freigelegt sind, wodurch eine Gefährdung von Personen möglich ist, wenn nicht die elektrische Anlage abgeschaltet wird. Eine Abschaltung der Anlage unterbleibt jedoch häufig, da der Strom für die Beleuchtung oder für Geräte benötigt wird.

Bei einigen bekannten Steckdosen besteht die Abdeckung aus zwei Teilen, nämlich einem vorwiegend nach ästhetischen Gesichtspunkten gestalteten äußeren Rahmen und einem Einsatzteil, das dem jeweiligen Steckersystem bzw. der Steckernorm entsprechend geformt ist. Bei diesen bekannten zweiteiligen Abdeckungen läßt sich jedoch der äußere Rahmen nur entfernen, nachdem das Einsatzteil abgeschraubt wurde.

Aus der US-A-4 293 173 ist eine Steckdose bekannt, bei der die Sockelabdeckung aus zwei Teilen besteht. Das erste Teil deckt die Kontaktelemente des Sockels nach außen ab und das zweite Teil ist das Deckplatte gestaltet, die um die Sockelabdeckung herumgreift und die Steckdose zur Wand hin abdeckt. Eingelegte Wärmedämmplatten sollen die Wärmeisolation erhöhen. Da die Sockelabdeckung fest mit dem Sockel verbunden ist, sind die Klemmen für die Anschlußdrähte nur von der Sockelrückseite aus zugänglich, wodurch das Ausschließen erschwert ist. Weiterhin bietet die Sockelabdeckung dem Stecker keine Führung beim Einstecken und die feste Verbindung zwischen der Sockelabdeckung und der Abdeckplatte ermöglicht keinen oder nur einen noch geringen Spielraum für einen Tapetenausgleich.

Der Erfindung liegt die Aufgabe zugrunde, eine Steckdose anzugeben, bei der für Renovierungsarbeiten an der Wand ein äußerer Bereich der Abdeckung entfernt werden kann, aber trotzdem eine Abdeckung spannungsführender Teile und eine für die Steckdosenbenutzung erforderliche Steckerführung verbleibt. Die einfache und Sicherheit gewährende Anschlußtechnik, bei der die Klemmen für die Anschlußdrähte zur Wandaußenseite hin betätigbar sind, soll unverändert bestehen bleiben.

Diese Aufgabe wird durch eine gattungsgemäße Steckdose mit den im Anspruch 1 gekennzeichneten Merkmalen gelöst.

Ausgestaltungen sind in den Unteransprüchen gekennzeichnet.

Die erfindungsgemäße Abdeckung hat den Vorteil, daß bei Renovierungsarbeiten ein nach sicherheits- und funktionsbedingten Merkmalen konstruierter Teil der Abdeckung (Steckertopf) mit dem Sockel der Steckdose verschraubt bleibt und die Steckdose weiterhin benutzt werden kann. Falls zur Befestigung der äußeren Abdeckplatte eine Steckverbindung vorgesehen wird, ist außerdem eine zeitsparende Montage und Demontage gegeben.

Ein Ausführungsbeispiel der Erfindung wird anhand der Zeichnung erläutert.

Es zeigen :

Figur 1   Steckdose mit Abdeckung der Seitenansicht,

Figur 2   Draufsicht auf die Abdeckung einer Steckdose.

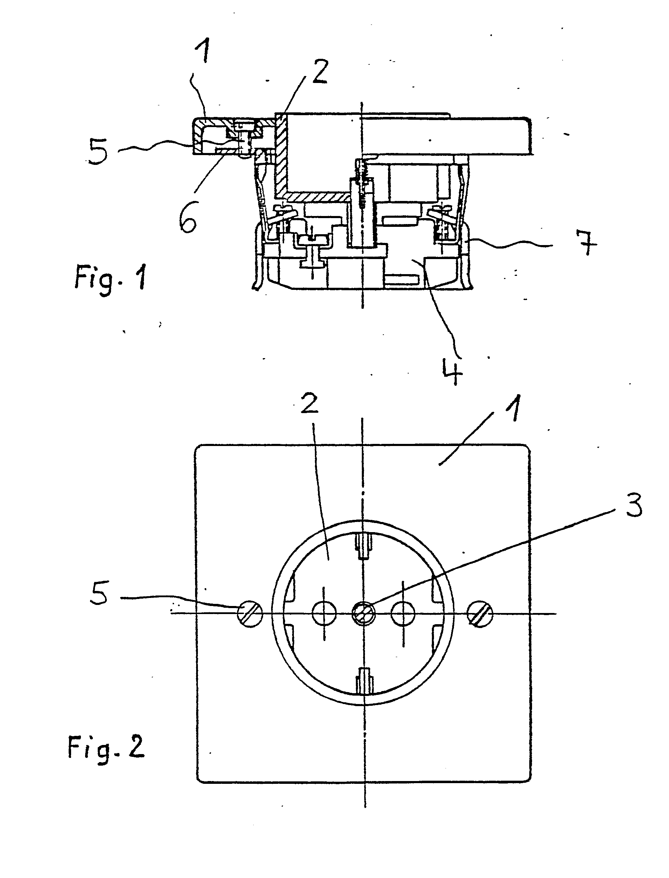

Fig. 1 zeigt eine Unterputzsteckdose mit zweiteiliger Abdeckung in der Seitenansicht und teilweise als Schnittbild. Die Abdeckung besteht aus einem topfförmigen Teil, der als Steckertopf 2 bezeichnet wird, und einer Abdeckplatte 1. Der Steckertopf 2 ist mit einer in Fig. 2 dargestellten Schraube 3 mit einem Sockel 4 verbunden, der spannungsführende Kontaktteile trägt. Die Abdeckplatte 1 ist im Ausführungsbeispiel mit Schrauben 5 an einem Tragring 6 befestigt. Die Abdeckplatte 1 kann jedoch auch mit schraubenlosen Mitteln befestigt werden. Eine Befestigungseinrichtung mit dem Tragring 6 und Spreizen 7 ist mit dem Sockel 4 verbunden.

Fig. 2 zeigt eine Draufsicht auf die Steckdose mit der Abdeckplatte 1 und dem Steckertopf 2.

Um die Abdeckplatte 1 entfernen zu können, muß der Steckertopf 2 nicht abgeschraubt werden. Der Steckertopf 2 hat im Ausführungsbeispiel die dem System Schucko entsprechende Form und die notwendigen Abmessungen (Topftiefe, Innendurchmesser, Innenkonturen, Löcher). Der Steckertopf 2 bietet daher auch bei abgenommener Abdeckplatte 1 die notwendige Steckerführung.

Die Erfindung läßt sich bei jedem Steckdosensystem und unter Berücksichtigung der jeweils gültigen in- oder ausländischen Norm anwenden, auch für Ausführungen mit Wasserschutzanforderungen. Die Abdeckplatte 1 kann auch ein Kombinationsrahmen für eine Kombinationsanordnung mehrerer Steckdosen oder sonstiger Geräte sein. Die Randhöhe der Abdeckplatte 1 wird so gewählt, daß ein Ausgleich von Wandunebenheiten oder Tapetenunterlagen gegeben ist. Wenn es sich um Aufputzgeräte handelt, wird die Abdeckplatte 1 zur Abdeckkappe.

## Patentansprüche

1. Steckdose zum Einbau in eine Wand oder zum Aufbau auf eine Wand, wobei die Steckdose aus einem Sockel (4) mit den erforderlichen Kontaktelementen, Befestigungsmitteln in Form eines Tragringes (6) oder von Befestigungsnocken und einer zweiteiligen Abdeckung (1, 2) besteht, deren erster Teil die Kontaktelemente des Sockels (4) abdeckt und deren zweiter Teil als Abdeckplatte (1) um den ersten Teil herumgreift und die Steckdose zur Wand hin abdeckt, dadurch gekennzeichnet, daß der erste Teil der Abdeckung (1, 2) als ein den Stecker aufnehmender Steckertopf (2) ausgebildet ist, dessen Innenraum der Steckernorm entsprechende Formen und Abmessungen (Topftiefe, Innendurchmesser, Innenkonturen, Löcher) besitzt und seine Befestigung mit mindestens einer Schraube (3) am Sockel (4) erfolgt und der zweite Teil der Abdeckung, die Abdeckplatte (1) mit Schrauben (5) oder schraubenlosen Mitteln am Sockel (4) oder Tragring (6) befestigt ist.

2. Steckdose nach Anspruch 1, dadurch gekennzeichnet, daß mit der entsprechend gestalteten Abdeckplatte (1) je nach Wandunebenheit oder Tapetenunterlage ein Ausgleich in bezug auf den Steckertopf (2) gegeben ist.

3. Steckdose nach einem der Ansprüche 1 bis 2, dadurch gekennzeichnet, daß es sich um eine Steckdose einer beliebigen bekannten Bauform (z. B. Unterputzgerät, Aufputzgeräte, Mehrfachsteckdosen, wassergeschützte Steckdosen) handelt.

4. Steckdose nach einem der Ansprüche 1 bis 3, dadurch gekennzeichnet, daß es sich um eine Steckdose nach einer beliebigen nationalen oder internationalen Steckdosennorm bzw. einem beliebigen Steckdosensystem handelt.

## Claims

1. Socket for fitting into a wall or for fitting onto a wall, the socket consisting of a base (4) with the necessary contact elements, fastening means in the form of a supporting ring (6) or fastening projections and a two-part cover (1, 2), of which the first part covers the contact elements of the base (4) and the second part engages round the first part as a cover plate (1) and covers the socket relative to the wall, characterized in that the first part of the cover (1, 2) is designed as a plug pot (2) which receives the plug and the interior of which has forms and dimensions conforming to the plug standard (pot depth, inside diameter, inner contours, holes), and is fastened to the base (4) by means of at least one screw (3), and the second part of the cover, namely the cover plate (1), is fastened to the base (4) or supporting ring (6) by means of screws (5) or screwless means.

2. Socket according to Claim 1, characterized in that the appropriately designed cover plate (1) ensures compensation relative to the plug pot (2) according to the unevenness of the wall or the wallpaper backing.

3. Socket according to one of Claims 1 to 2, characterized in that it is a socket of any known design (for example, flush socket, surface sockets, multiple sockets, waterproof sockets).

4. Socket according to one of Claims 1 to 3, characterized in that it is a socket in accordance with any national or international socket standard or any socket system.

## Revendications

1. Prise de courant pour encastrement dans une paroi ou application sur une paroi, la prise de courant étant composée d'un socle (4) avec les éléments de contact nécessaires, de moyens de fixation sous la forme d'un anneau support (6) ou d'ergots de fixation et d'un couvercle en deux parties (1, 2) dont la première partie recouvre les éléments de contact du socle (4) et dont la seconde partie, en tant que plaque de recouvrement (1), entoure la première partie et recouvre la prise de courant du côté de la paroi, caractérisée par le fait que la première partie du couvercle (1, 2) est réalisée sous la forme d'une cuvette (2) recevant la fiche mâle et dont l'espace intérieur présente les formes et les dimensions (profondeur de la cuvette, diamètre intérieur, contours intérieurs, trous) correspondant aux normes applicables aux prises de courant mâles, et que sa fixation sur le socle est assurée par au moins une vis (3), et que la seconde partie du couvercle, la plaque de recouvrement (1), est fixée au socle (4) ou à l'anneau support (6) par des vis (5) ou des moyens sans vis.

2. Prise de courant selon la revendication 1, caractérisée par le fait que la plaque de recouvrement (1) façonnée en conséquence suivant l'irrégularité des parois ou la couche de papier peint, permet une compensation par rapport à la cuvette (2).

3. Prise de courant selon l'une des revendications 1 à 2, caractérisée par le fait qu'il s'agit d'une prise de courant de n'importe quel type connu (par exemple appareil encastré, appareil mural, prise multiple, prise de courant protégée contre les eaux).

4. Prise de courant selon l'une des revendications 1 à 3, caractérisée par le fait qu'il s'agit d'une prise de courant selon une norme nationale ou internationale quelconque ou selon un système de prises de courant quelconque.

Fig. 1

Fig. 2